(19) **Europäisches Patentamt European Patent Office Office européen des brevets**

(11) **EP 4 704 446 A1**

(12) **EUROPEAN PATENT APPLICATION**
published in accordance with Art. 153(4) EPC

(43) Date of publication:
04.03.2026 Bulletin 2026/10

(21) Application number: 23934485.6

(22) Date of filing: 26.04.2023

(51) International Patent Classification (IPC):
H04W 4/02 (2018.01)  G01S 5/02 (2010.01)
G06N 3/02 (2006.01)

(52) Cooperative Patent Classification (CPC):
G01S 5/02; G06N 3/02; H04W 4/02; H04W 64/00

(86) International application number:
PCT/CN2023/090917

(87) International publication number:
WO 2024/221283 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Quectel Wireless Solutions Co., Ltd.
Shanghai 201601 (CN)

(72) Inventors:
• ZHAO, Zheng
  Shanghai 201601 (CN)
• LYU, Ling
  Shanghai 201601 (CN)
• YANG, Zhongzhi
  Shanghai 201601 (CN)

(74) Representative: Fish & Richardson P.C.
Highlight Business Towers
Mies-van-der-Rohe-Straße 8
80807 München (DE)

(54) **METHOD AND APPARATUS FOR TRAINING POSITIONING MODEL, AND METHOD AND APPARATUS FOR POSITIONING**

(57) The present disclosure provides a method for training a positioning model, a method for positioning, an apparatus for training a positioning model, and an apparatus for positioning. The method for training the positioning model includes: obtaining first channel impulse response (CIR), where the first CIR is obtained based on measurement of a reference signal of a first reference point; merging the first CIR and a first location label to form first label data; and training the positioning model based on the first label data. The reference signal is used for positioning, the reference signal is sent or received by one or more communication devices, and the one or more communication devices include a first communication device. In a 5G communication system, the CIR of the reference signal is easily collected. Thus, a large amount of CIR data can be obtained. A more accurate positioning model may be trained based on the large amount of CIR data. That is, when the positioning model is used for positioning, the accuracy of the obtained positioning result is greatly improved.

FIG. 3

**Description**

**TECHNICAL FIELD**

The present disclosure relates to the field of communication technology, and more specifically to a method and apparatus for training a positioning model, and a method and apparatus for positioning.

**BACKGROUND**

With the development of communication technology, a large number of 5G network devices are deployed, and the era of 5G-A has arrived. In many environments, terminal devices can easily access the 5G network. How to achieve more precise positioning in the communication system is an urgent issue to be addressed.

**SUMMARY**

The present disclosure provides a method and apparatus for training a positioning model, and a method and apparatus for positioning. Various aspects related to the present disclosure are described below.

According to a first aspect, a method for training a positioning model is provided, including: obtaining first channel impulse response, CIR, where the first CIR is obtained based on measurement of a reference signal of a first reference point; merging the first CIR and a first location label to form first label data; and training the positioning model based on the first label data; where the reference signal is used for positioning, the reference signal is sent or received by one or more communication devices, and the one or more communication devices include a first communication device.

In some embodiments, the first location label includes one or both of: a line-of-sight type between the first reference point and the first communication device; and location coordinates of the first reference point.

In some embodiments, the line-of-sight type is determined based on one or both of: a distance between the first reference point and the first communication device; and a first time of arrival of the reference signal at the first communication device.

In some embodiments, in a case that $c \times t_b^a - d_b^a \leq \varphi_1$ is satisfied, the line-of-sight type is line of sight; and/or in a case that $c \times t_b^a - d_b^a > \varphi_2$ is satisfied, the line-of-sight type is non-line of sight; where $c$ is a speed of light, $t_b^a$ is the first time of arrival, $\varphi_1$ is a first threshold, $\varphi_2$ is a second threshold, $d_b^a$ is the distance between the first reference point and the first communication device, b is an identifier of the first reference point, and a is an identifier of the first communication device.

In some embodiments, the first threshold $\varphi_1$ satisfies $\varphi_1 = c \times t_s$, and/or the second threshold $\varphi_2$ satisfies $\varphi_2 = c \times t_s$, where $t_s$ is a sampling time interval of the reference signal.

In some embodiments, the first CIR is represented as a matrix
$$H_b^a = \begin{pmatrix} R_1 & I_1 \\ R_2 & I_2 \\ \vdots & \vdots \\ R_N & I_N \end{pmatrix}$$
, where N represents a number of sampling points corresponding to the first CIR, R represents a real part, I represents an imaginary part, b is an identifier of the first reference point, and a is an identifier of the first communication device.

In some embodiments, the method further includes performing truncation on the first CIR to obtain processed first CIR, where the processed first CIR is represented as a matrix
$$\hat{H}_b^a = \begin{pmatrix} R_1 & I_1 \\ R_2 & I_2 \\ \vdots & \vdots \\ R_M & I_M \end{pmatrix}$$
, where M is a value less than N.

In some embodiments, the method further includes performing row and column conversion on the matrix $\hat{H}_b^a$ to obtain a CIR image; where the CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$ , u represents a number of sampling points corresponding to the processed first CIR, and 2u×v+1 represents a number of points in a data set.

In some embodiments, the positioning model includes one or both of a convolutional neural network, CNN, model and a K-nearest neighbor, KNN, model.

According to a second aspect, a method for positioning is provided, including: obtaining first channel impulse response, CIR, where the first CIR is obtained based on measurement of a reference signal of a test point; and inputting the first CIR into a positioning model to obtain first location information; where the reference signal is used for positioning, the reference signal is sent or received by one or more communication devices, and the one or more communication devices include a first communication device.

In some embodiments, the first location information includes one or both of: a line-of-sight type between the test point and the first communication device; and a line-of-sight type between the test point and the first communication device; and

In some embodiments, the test point is located in a first region, the first region includes a plurality of reference points, the plurality of reference points include the first reference point, and location coordinates of the test point are determined based on similarity probabilities corresponding between the test point and the plurality of reference points, and location coordinates of the plurality of reference points.

In some embodiments, the location coordinates L of the test point satisfies $L = \dfrac{\sum_{k \in \Omega} p_k (x_k, y_k)}{\sum_{k \in \Omega} p_k}$ , where $\Omega$ is

a set of first K reference points with high similarity probabilities, and $(x_k, y_k)$ are coordinates of a $k^{\text{th}}$ reference point, and $p_k$ is a similarity probability between the test point and a location corresponding to the $k^{\text{th}}$ reference point.

In some embodiments, the first CIR is represented as a matrix $H_b^a = \begin{pmatrix} R_1 & I_1 \\ R_2 & I_2 \\ \vdots & \vdots \\ R_N & I_N \end{pmatrix}$ , where N represents a number of sampling points corresponding to the first CIR, R represents a real part, I represents an imaginary part, b is an identifier of the test point, and a is an identifier of the first communication device.

In some embodiments, the method further includes performing truncation on the first CIR to obtain processed first CIR, where the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$ , where M is a value less than N.

In some embodiments, the method further includes performing row and column conversion on the matrix $\hat{H}_b^a$ to obtain a CIR image; where the CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$ , where u represents a number of sampling points corresponding to the processed first CIR, and 2u×v+1 represents a number of points in a data set.

In some embodiments, the positioning model includes one or both of a convolutional neural network, CNN, model and a K-nearest neighbor, KNN, model.

According to a third aspect, an apparatus for training a positioning model is provided, including: a first obtaining unit, configured to obtain first channel impulse response. CIR, where the first CIR is obtained based on measurement of a reference signal of a first reference point; a merging unit, configured to merge the first CIR and a first location label to form first label data; and a training unit, configured to train the positioning model based on the first label data; where the reference signal is used for positioning, the reference signal is sent or received by one or more communication devices, and the one or more communication devices include a first communication device.

In some embodiments, the first location label includes one or both of: a line-of-sight type between the first reference point and the first communication device; and location coordinates of the first reference point.

In some embodiments, the line-of-sight type is determined based on one or both of: a distance between the first reference point and the first communication device; and a first time of arrival of the reference signal at the first communication device.

In some embodiments, in a case that $c \times t_b^a - d_b^a \leq \varphi_1$ is satisfied, the line-of-sight type is line of sight; and/or in a case that $c \times t_b^a - d_b^a > \varphi_2$ is satisfied, the line-of-sight type is non-line of sight; where $c$ is a speed of light, $t_b^a$ is the first time of arrival, $\varphi_1$ is a first threshold, $\varphi_2$ is a second threshold, $d_b^a$ is the distance between the first reference point and the first communication device, b is an identifier of the first reference point, and a is an identifier of the first communication device.

In some embodiments, the first threshold $\varphi_1$ satisfies $\varphi_1 = c \times t_s$, and/or the second threshold $\varphi_2$ satisfies $\varphi_2 = c \times t_s$, where $t_s$ is a sampling time interval of the reference signal.

In some embodiments, the first CIR is represented as a matrix $H_b^a = \begin{pmatrix} R_1 & I_1 \\ R_2 & I_2 \\ \vdots & \vdots \\ R_N & I_N \end{pmatrix}$, where N represents a number of sampling points corresponding to the first CIR, R represents a real part, I represents an imaginary part, b is an identifier of the first reference point, and a is an identifier of the first communication device.

In some embodiments, the apparatus further includes a first truncation unit, configured to perform truncation on the first CIR to obtain processed first CIR, where the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$, where M is a value less than N.

In some embodiments, the apparatus further includes a first conversion unit, configured to perform row and column conversion on the matrix $\hat{H}_b^a$ to obtain a CIR image; where the CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$

, u represents a number of sampling points corresponding to the processed first CIR, and 2u×v+1 represents a number of points in a data set.

In some embodiments, the positioning model includes one or both of a convolutional neural network, CNN, model and a K-nearest neighbor, KNN, model.

According to a fourth aspect, an apparatus for positioning is provided, including: a second obtaining unit, configured to obtain first channel impulse response, CIR, where the first CIR is obtained based on measurement of a reference signal of a test point; and a processing unit, configured to input the first CIR into a positioning model to obtain first location information; where the reference signal is used for positioning, the reference signal is sent or received by one or more communication devices, and the one or more communication devices include a first communication device.

In some embodiments, the first location information includes one or both of: a line-of-sight type between the test point and the first communication device; and a similarity probability between a location corresponding to the test point and a location corresponding to a first reference point.

In some embodiments, the test point is located in a first region, the first region includes a plurality of reference points, the plurality of reference points include the first reference point, and location coordinates of the test point are determined based on similarity probabilities corresponding between the test point and the plurality of reference points; and location coordinates of the plurality of reference points.

In some embodiments, the location coordinates L of the test point satisfies $L = \dfrac{\sum_{k \in \Omega} p_k(x_k, y_k)}{\sum_{k \in \Omega} p_k}$, where $\Omega$ is a set of first K reference points with high similarity probabilities, and $(x_k, y_k)$ are coordinates of a $k^{th}$ reference point, and $p_k$ is a similarity probability between the test point and a location corresponding to the $k^{th}$ reference point.

In some embodiments, the first CIR is represented as a matrix $H_b^a = \begin{pmatrix} R_1 & I_1 \\ R_2 & I_2 \\ \vdots & \vdots \\ R_N & I_N \end{pmatrix}$, where N represents a number of sampling points corresponding to the first CIR, R represents a real part, I represents an imaginary part, b is an identifier of the test point, and a is an identifier of the first communication device.

In some embodiments, the apparatus further includes a second truncation unit, configured to perform truncation on the first CIR to obtain processed first CIR, where the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$, where M is a value less than N.

In some embodiments, the apparatus further includes a second conversion unit, configured to perform row and column conversion on the matrix $\hat{H}_b^a$ to obtain a CIR image; where the CIR image is represented as a matrix $T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$, where u represents a number of sampling points corresponding to the processed first CIR, and 2u×v+1 represents a number of points in a data set.

In some embodiments, the positioning model includes one or both of a convolutional neural network, CNN, model and a K-nearest neighbor, KNN, model.

According to a fifth aspect, an apparatus is provided, including a processor and a memory, where the memory is configured to store one or more computer programs, and the processor is configured to invoke the computer programs in the memory to cause a terminal device to perform some or all of operations in the methods in the first aspect and/or the second aspect.

According to a sixth aspect, an apparatus is provided, including a processor, a memory, and a transceiver, where the memory is configured to store one or more computer programs, and the processor is configured to invoke the computer programs in the memory to cause a network device to perform some or all of operations in the methods in the first aspect and/or the second aspect.

According to a seventh aspect, an embodiment of the present disclosure provides a communication system, where the system includes the above apparatus for training the positioning model and/or the apparatus for positioning. In another possible design, the system may further include another device in the solution provided in the embodiments of the present disclosure that interacts with the apparatus for training the positioning model or the apparatus for positioning.

According to an eighth aspect, an embodiment of the present disclosure provides a computer-readable storage medium, where the computer-readable storage medium stores a computer program, and the computer program causes the apparatus for training the positioning model and/or the apparatus for positioning to perform some or all of the operations in the methods in the foregoing aspects.

According to a ninth aspect, an embodiment of the present disclosure provides a computer program product, where the computer program product includes a non-transitory computer-readable storage medium storing a computer program, and the computer program is executable to cause the apparatus for training the positioning model and/or the apparatus for positioning to perform some or all of the operations in the methods in the foregoing aspects. In some implementations, the computer program product may be a software installation package.

According to a tenth aspect, an embodiment of the present disclosure provides a chip, where the chip includes a memory and a processor, and the processor may invoke and run a computer program from the memory, to implement some or all of the operations described in the methods in the foregoing aspects.

In a 5G communication system, the CIR of the reference signal is easily collected. Thus, a large amount of CIR data can be obtained. A more accurate positioning model may be trained based on a large amount of CIR data. That is, when the positioning model is used for positioning, the accuracy of the obtained positioning result is greatly improved.

## BRIEF DESCRIPTION OF THE DRAWINGS

FIG. 1 is a schematic diagram of a wireless communication system applied in an embodiment of the present disclosure.

FIG. 2 is an example diagram of an application scenario in an embodiment of the present disclosure.

FIG. 3 is a schematic flowchart of a method for training a positioning model according to an embodiment of the present disclosure.

FIG. 4 is a schematic flowchart of a method for positioning according to an embodiment of the present disclosure.

FIG. 5 is a schematic flowchart of a method provided in Embodiment 1 of the present disclosure.

FIG. 6 is a schematic flowchart of a method provided in Embodiment 2 of the present disclosure.

FIG. 7 is a schematic structural diagram of an apparatus for training a positioning model according to an embodiment of the present disclosure.

FIG. 8 is a schematic structural diagram of an apparatus for positioning according to an embodiment of the present disclosure.

FIG. 9 is a schematic structural diagram of an apparatus for communication according to an embodiment of the present disclosure.

## DETAILED DESCRIPTION OF THE EMBODIMENTS

The technical solutions in the present disclosure will be described below with reference to the accompanying drawings.

COMMUNICATION SYSTEM

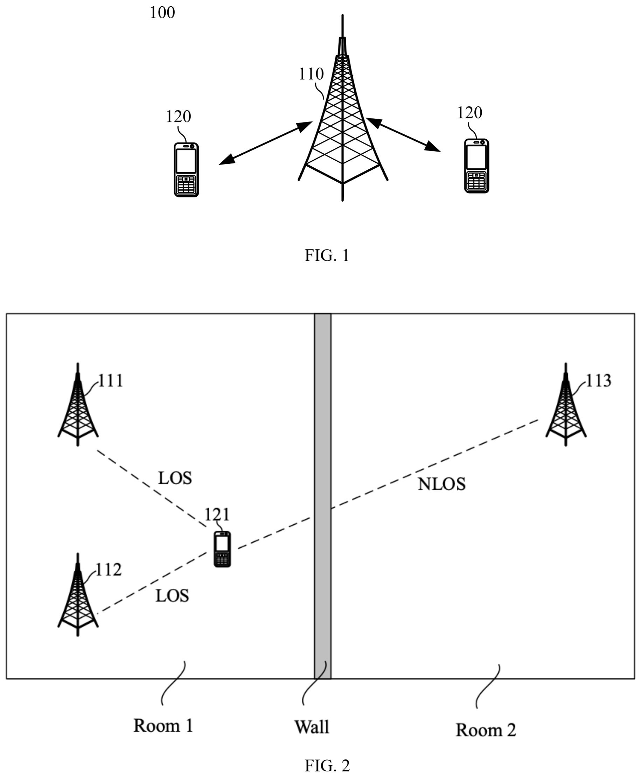

FIG. 1 is a wireless communication system 100 applied in embodiments of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5th generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the UE may serve as a base station. For example, the UE may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal. The network device may also include an access network device. The access network device may also be referred to as a wireless access network device or a base station, etc. The access network device in the embodiments of the present disclosure may refer to a radio access network (RAN) node (or device) that accesses the terminal device to a wireless network. The access network device may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the access network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

The communication devices involved in a wireless communication system may include not only the access network device and the terminal device but also a core network device. The core network device may also be a network device.

The core network device in the embodiments of the present disclosure may include a device that processes and forwards signaling and data for users. For example, the core network device may include a core access and mobility management function (AMF), a session management function (SMF), as well as a user plane gateway, a location server, and other core network devices. Among these, the user plane gateway may be a server having functions such as mobility management, routing, and forwarding of user plane data, typically located on the network side, such as a serving gateway (SGW), a packet data network gateway (PGW), or a user plane function (UPF), etc. The AMF and SMF can be analogous to a mobility management entity (MME) in LTE systems. The AMF is primarily responsible for access control, and the SMF is primarily responsible for session management. Of course, the core network may also include other network elements, which are not listed here.

The location server has a positioning function. The location server involved in the present disclosure may include a location management function (LMF), a location management component (LMC), or a local location management function (LLMF) located in the network device, which is not limited in the embodiments of the present disclosure. In some embodiments, the location server may also be referred as to a location management device.

It should be understood that all or part of functions of the communication device in the present disclosure may also be implemented by a software function running on hardware or implemented by a virtualization function instantiated on a platform (e.g., a cloud platform).

POSITIONING TECHNOLOGY

In communication systems, location-based services (such as navigation positioning) are receiving widespread attention. In wireless positioning systems, location of mobile terminal devices can be estimated by mapping signal characteristics to spatial positions. Positioning methods may be based on one or more of: ranging, angle, proximity, and fingerprint. The following is a detailed explanation.

For ranging-based positioning, a geometric shape (such as a circle or hyperbola) may be constructed based on distances from the terminal device to at least three network devices. Furthermore, a positioning result is obtained by calculating intersection points of the geometric shape. Time of arrival (TOA) and time difference of arrival (TDOA) are commonly used signal characteristics in the ranging-based positioning method. The ranging positioning method based on received signal strength (RSS) requires fitting a path loss model.

For angle-based positioning, the position of the terminal device is estimated by calculating angle of arrival (AOA) of at least two input signals.

For proximity-based positioning, a coverage area of the network device that provides the strongest RSS received by the terminal device is considered as a location of the terminal device. The coverage area of the network device is typically large, so this method is simple but has low positioning accuracy.

For fingerprint-based positioning, a region is divided into multiple reference points. By utilizing characteristics of the environment, a position of a reference point with the most similar characteristic is taken as an estimated position of the terminal device. Available signal characteristics may include RSS, etc. Fingerprint-based positioning requires the collection of positioning data from each reference point to form a fingerprint. In other words, the accuracy of the fingerprint largely depends on the sufficiency of the dataset. Additionally, compared to the ranging-based positioning method, fingerprint has lower hardware requirements. Thus, it is seen that the fingerprint-based positioning method achieves high-accuracy positioning result at the expense of the time required to collect training data.

The fingerprint positioning algorithm is classified into a probabilistic algorithm and a deterministic algorithm. The probabilistic algorithm is based on statistical theories such as maximum likelihood estimation (MLE) and/or Bayesian criteria, using probability density distribution of signal strength to select a reference point (i.e., fingerprint) with the highest probability as an estimated position of the user terminal. The deterministic algorithm is further classified into two types, i.e., an algorithm that does not require a training model and an algorithm that requires a training model. The algorithm that does not require the training model is represented by K-nearest neighbors (KNN) and weighted K-nearest neighbors (WKNN). The algorithm that requires the training model, for example, is implemented based on one or more of the following models: support vector machine (SVM), deep neural network (DNN), and convolutional neural network (CNN).

With the development of communication technology and the large-scale deployment of 5G network devices, the arrival of the 5G-A era allows terminal devices to easily connect to 5G networks in various environments. How to achieve more accurate positioning in communication systems is an urgent problem that needs to be solved.

To address the above problem, the present disclosure provides a method for positioning, which may obtain a positioning model based on channel impulse response (CIR) of a reference signal in a communication system. The positioning model can realize the positioning of the terminal device within a region to be positioned.

The positioning model may be an artificial intelligence (AI) model. Alternatively, the positioning model may be a machine learning (ML) model. In other words, the present disclosure achieves AI/ML-based positioning. AI models may include CNN models, DNN models, KNN models, etc. The present disclosure does not limit the specific structure and parameters of the AI model. Taking the CNN model as an example, the CNN model may include an input layer, a convolutional layer, a pooling layer, a fully connected layer, and a softmax layer connected in sequence. The parameters of the AI model may be obtained through experimental result analysis.

The method for positioning may include two phases: an offline phase and an online phase.

The offline phase may realize construction of the positioning model. In the case where the positioning model is an AI model, the construction of the positioning model may be achieved through learning or training. Therefore, the offline phase may also be referred to as a training phase or learning phase.

During the offline phase, the first CIR may be used to construct the positioning model. The first CIR may be obtained based on measurement of a reference signal (RS). The first CIR may be obtained by measuring the reference signal transmitted at a first reference point. In other words, the first CIR may refer to a measurement value of CIR of the reference signal sent or received at the first reference point. Correspondingly, CIR of a plurality of reference points may be CIR obtained by measuring reference signals sent or received the plurality of reference points.

It should be noted that the first reference point may belong to the plurality of reference points. The plurality of reference points may be selected from the region to be positioned. The present disclosure does not limit the selection method of the plurality of reference points. For example, reference points may be uniformly selected within the region to be positioned.

The positioning model may be used to determine location information of the terminal device. Therefore, location information of the first reference point (i.e., actual location information of the first reference point) is used as a label, and the positioning model may be trained (constructed) based on the first CIR and the location information of the first reference point. It should be understood that the more training data used to train the positioning model, the higher the accuracy of the positioning model. Therefore, the training data may also include other data, meaning that the training data not only includes the first CIR and the location information of the first reference point but also includes CIR of other reference points and location information of other reference points. For example, location information of some or all reference points among the plurality of reference points may be composed into a fingerprint database, and the positioning model may be trained using the fingerprint database. Some or all reference points among the plurality of reference points may include the first reference point. In some embodiments, a relatively ideal positioning model may be obtained after simulation.

During the online phase, test data may be used to position a test point where the terminal device is located. The test point may be a location point within a region to be tested. In other words, when the test point where the terminal device is located is within the region to be positioned, location information of the test point may be determined using the positioning model. The test data may include, for example, CIR of the test point. That is, at the test point, the CIR of the test point may be measured, and the location information of the test point may be obtained based on that CIR.

It should be understood that the online phase may be considered a usage phase of the positioning model. Therefore, the online phase may be referred to as a positioning phase.

It should be noted that the region to be positioned may be a region where the positioning model can be applied or an effective region of the positioning model. The region to be positioned may be indoors.

In some communication systems (e.g., 5G systems), the CIR of the reference signal is easily collected. Therefore, a large amount of CIR data can be obtained. Based on a large amount of CIR data, the constructed positioning model can be made more accurate. The positioning accuracy achieved based on this positioning model is significantly improved.

The following describes input and output data of the positioning model.

The input to the positioning model may be the first CIR. In the offline phase, the first CIR may be obtained based on the measurement of the reference signal at the first reference point. For example, the terminal device may be used to separately collect CIR measurement values of reference signals at some or all reference points within the region to be positioned. The first CIR may be any one of the multiple collected CIR measurement values. In the online phase, the first CIR may be obtained based on the measurement of the reference signal at the test point. For example, the terminal device may collect the first CIR of the reference signal at a test point randomly selected within the region to be positioned.

It should be noted that the reference signal in the present disclosure may be a reference signal used for positioning. For example, the reference signal may be one or more of: a sounding reference signal (SRS) for positioning, a positioning reference signal (PRS), etc.

The reference signal (or reference signal sequence) may be sent or received by one or more communication devices. One or more communication devices may include a first communication device. The first communication device may be used to position the terminal device to be positioned. For example, the first communication device may include a base station that sends the reference signal. As an implementation, the base station may send the reference signal, and the terminal device may receive the reference signal. The terminal device may measure the reference signal to obtain the first CIR. The terminal device may return the measured first CIR to the location server. The location server may perform calculations based on the first CIR using the positioning model.

It should be noted that the present disclosure does not limit the type of the first communication device. For example, the first communication device may also be a base station that receives the reference signal, or the first communication device may be another terminal device that performs sidelink communication with the terminal device to be positioned.

The present disclosure does not limit the representation of the first CIR. The following describes the first CIR represented as a matrix as an example.

In some embodiments, the first CIR may be represented as a matrix $H_b^a$. $H_b^a$ may be represented as:

$$H_b^a = \begin{pmatrix} R_1 & I_1 \\ R_2 & I_2 \\ \vdots & \vdots \\ R_N & I_N \end{pmatrix},$$

where N represents a number of sampling points corresponding to the first CIR, R represents a real part, I represents an imaginary part, and *a* is an identifier of the first communication device. In the offline phase, b represents an identifier of the first reference point, and in the online phase, b represents an identifier of the test point.

It should be understood that there are multipath effects between a transmitter and a receiver of the reference signal. Therefore, the receiver may perform multiple samplings to comprehensively represent the first CIR. The number of sampling points corresponding to the multiple samplings may be the N mentioned above. N may be a positive integer. For example, N may be equal to 4096.

In some embodiments, the first CIR may undergo preprocessing. After preprocessing, the processed first CIR may be obtained. Inputting the processed first CIR into the positioning model may simplify the processing of the positioning model, thereby improving the processing efficiency of the positioning model.

In some embodiments, preprocessing may include truncation. Truncation may involve reducing the number of sampling points of the first CIR. For example, sampling points in the first CIR that are close to zero may be removed, or sampling points with minimal data impact may be removed, thereby reducing the number of sampling points of the first CIR. Truncation may reduce the data volume of the first CIR, thus simplifying calculation of the positioning model and improving the processing efficiency of the positioning model.

Taking the first CIR represented as the matrix $H_b^a$ as an example, after truncation is performed on the first CIR, the obtained processed first CIR may be represented as a matrix $\hat{H}_b^a$. $\hat{H}_b^a$ may be represented as:

$$\hat{H}_b^a = \begin{pmatrix} R_1 & I_1 \\ R_2 & I_2 \\ \vdots & \vdots \\ R_M & I_M \end{pmatrix},$$

where M is a value less than N. For example, M may be 256. It should be understood that $\hat{H}_b^a$ may only retain the first M rows of data in $H_b^a$. The value of M may be determined according to the number of sampling points in $H_b^a$ that have an impact on positioning. For example, M may be 256.

In some embodiments, the preprocessing may include row and column conversion. For example, row and column conversion may be performed on the matrix $\hat{H}_b^a$ to obtain a CIR image. The CIR image may be represented as a matrix $T_b^a$. $T_b^a$ may be represented as:

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix},$$

where u represents a number of sampling points corresponding to the processed first CIR, and 2u×v+1 represents a number of points in a data set.

It should be noted that, after row and column conversion, if an insufficient element exists in the matrix, element 0 may be used to fill. For example, if the last two elements in the last row in $T_b^a$ are insufficient, element 0 may be used to fill. Alternatively, the last two elements in the last row in $T_b^a$ may also be filled with other elements.

It should be noted that the foregoing $T_b^a$ is merely an example. The last two elements in the last row in $T_b^a$ may be present, i.e., no filling is required.

The input of the positioning model is described in detail above, and the output of the positioning model is described below.

The output of the positioning model may be first location information. The first location information may correspond to the first CIR. A location point corresponding to the first location information may be the first reference point or the test point. In other words, when the first CIR is the CIR of the first reference point, the first location information may be the location information of the first reference point. When the first CIR is the CIR of the test point, the first location information may be the location information of the test point. In the online phase, after inputting the first CIR into the positioning model, the positioning model may derive and output the first location information. In the offline phase, the training data used for training the positioning model may include the first location information, meaning that the first location information may serve as a label for training the positioning model. Therefore, in the offline phase, the first location information may also be referred to as a first location label. The following text mainly provides exemplary explanations of the first location information, and the first location label may refer to the description of the first location information.

The first location information may include any information related to the location. In some embodiments, the first location information may include one or both of: a line-of-sight type between the location point corresponding to the first location information and the first communication device, and location coordinates of the location point corresponding to the first location information.

The region to be positioned may be represented by a region in a coordinate system, and the location coordinates may be represented by coordinate points in the coordinate system. For example, the location coordinates may be represented as $(x_b, y_b)$. Here, $x_b$ represents an x-axis coordinate corresponding to the location coordinates, and $y_b$ represents a y-axis coordinate corresponding to the location coordinates. It should be understood that when the first location information includes the location coordinates, the positioning model may be used to determine specific coordinates of the terminal device, meaning that the positioning model may be directly used for positioning.

As an implementation, the positioning model may output similarity between the test point and the first reference point and determine location coordinates of the test point based on the similarity. In other words, the present disclosure transforms the positioning problem into a problem of location similarity between the test point and each reference point. In a case where the region to be positioned includes a plurality of reference points, the positioning model may output the similarity between the test point and the plurality of reference points. Similarity may be represented by similarity probability. The similarity probability between a location corresponding to the test point and a location corresponding to the first reference point may be used to represent the probability that the test point is at the location of the first reference point. For example, among K reference points, the similarity between the test point and the $k^{th}$ reference point may be represented as probability $p_k$.

In some embodiments, location points with high similarity may be classified into the same category. For example, positioning coordinates L of the test point may be obtained using a probability-weighted centroid algorithm. The probability-weighted centroid algorithm may be implemented using the following formula:

$$L = \frac{\sum_{k \in \Omega} p_k (x_k, y_k)}{\sum_{k \in \Omega} p_k}$$

. Here, $(x_k, y_k)$ are coordinates of the $k^{th}$ reference point. For instance, if the region to be positioned includes two reference points, with coordinates a and b respectively, the similarity probability between the test point and the reference point a is 10%, and the similarity probability between the test point and the reference point b is 90%, then the coordinates of the reference points may be 0.1a+0.9b.

It should be noted that in the probability-weighted centroid algorithm, the K reference points may be some or all of the reference points in the region to be positioned. For example, the K reference points may be those reference points that have a higher similarity to the test point. As an implementation, the reference points may be sorted based on the similarity probabilities thereof output by the positioning model, and the top K reference points with the highest similarity probabilities may be selected as the reference points participating in the probability-weighted centroid algorithm.

It should be understood that if the location coordinates of the reference point are directly used as the location coordinates of the test point, then the location coordinates of the test point can only be the location coordinates of a certain reference point. However, the coordinates of the test point obtained through the probability-weighted centroid algorithm may be any coordinate point within the region to be positioned. Therefore, based on the probability-weighted centroid algorithm proposed in the present disclosure, a more accurate location is obtained, thereby improving positioning accuracy.

The line-of-sight type may be classified into non-line of sight (NLOS) and line of sight (LOS). Line of sight refers to that the terminal device to be positioned and the first communication device can mutually observe each other through visual observation or visual aids. Non-line of sight refers to that the terminal device to be positioned and the first communication device cannot mutually observe each other through visual observation or visual aids. FIG. 2 illustrates an example diagram of line of sight and non-line of sight. As shown in FIG. 2, the terminal device 121 is the terminal device to be located. The terminal device 121 is located within Room 1. The network device 111 and the network device 112 are both located within Room 1. Since they are in the same room and the network device 111 or network device 112 and the terminal device 121 can visually observe each other, the line-of-sight type between the network device 111 and the terminal device 121 may be classified as line of sight, and the line-of-sight type between the network device 112 and the terminal device 121 may also be classified as line of sight. The network device 113 is located in Room 2. Due to the wall separating Room 1 and Room 2, it is difficult for the network device 113 and the terminal device 121 to visually observe each other, so the line-of-sight type between the network device 113 and the terminal device 121 may be classified as non-line of sight.

In some embodiments, the inability to determine the line-of-sight type may lead to an inability to accurately calculate the positioning location. For example, in the case of non-line of sight, due to reasons such as obstruction or reflection of the reference signal, positioning based on the corresponding reference signal may actually reduce the accuracy of the positioning. Continuing to refer to FIG. 2, a location of the terminal device 121 may be jointly determined by reference signals transmitted by the network device 111, the network device 112, and the network device 113. However, due to the presence of non-line-of- sight conditions, the inclusion of the network device 113 in the positioning may lead to a significant decrease in positioning accuracy.

Based on the present disclosure, the line-of-sight type is determined, allowing for the selection of appropriate positioning algorithms or data according to the line-of-sight type. For example, data of the non-line-of-sight type may be excluded from the positioning calculation. Continuing to refer to FIG. 2, if it is determined based on the present disclosure that the line-of-sight type between the network device 113 and the terminal device 121 is non-line of sight, the reference signal transmitted by the network device 113 may be ignored, and the location of the terminal device 121 may be determined solely based on the reference signals from the network device 111 and the network device 112. This helps avoid adverse effects of non-line-of-sight conditions on positioning, thereby improving positioning accuracy.

It is seen that when the first location information includes the line-of-sight type, the positioning model can be used to determine whether the line-of-sight type between the terminal device and the first network device is line of sight or non-line of sight. Furthermore, based on the line-of-sight type, an appropriate positioning algorithm or data is selected. That is, the selection of data or positioning algorithms is achieved based on the line-of-sight type to achieve accurate positioning. In other words, in this case, the positioning model may be indirectly used for positioning.

As mentioned above, after determining the line-of-sight type, the location coordinates of the test point may be further determined based on the line-of-sight type. The present disclosure does not limit the method for determining the location coordinates of the test point. For example, the location coordinates of the test point may be determined using the direct positioning method described above. Alternatively, positioning algorithms such as TOA, TDOA, or path loss may be used to determine the location coordinates of the test point.

The present disclosure does not limit the representation of the line-of-sight type. For example, the line-of-sight type may be represented as $G_b^a$. $G_b^a$ satisfies:

$$G_b^a \begin{cases} 0, & \text{line of sight} \\ 1, & \text{non} - \text{line of sight} \end{cases}.$$

As mentioned above, in the online phase, the line-of-sight type of the test point may be determined based on the positioning model. In the offline phase, the present disclosure provides a method for determining the line-of-sight type, allowing the determined line-of-sight type to be used as a label for training data, thereby facilitating the training of the positioning model.

As an implementation, the line-of-sight type may be related to one or both of: a distance between the first reference point and the first communication device, and a first time of arrival of the reference signal at the first communication device.

The first time of arrival may be defined as a duration between a moment the sender transmits the reference signal and a moment the receiver first receives that reference signal. For example, the first time of arrival may be represented as $t_b^a$. The distance between the first reference point and the first communication device may be represented as $d_b^a$.

In some embodiments, in a case that $c \times t_b^a - d_b^a \leq \varphi_1$ is satisfied, the line-of-sight type may be classified as line of sight; and/or in a case that $c \times t_b^a - d_b^a > \varphi_2$ is satisfied, the line-of-sight type may be classified as non-line of sight, where $c$ represents the speed of light, $\varphi_1$ is a first threshold, and $\varphi_2$ is a second threshold.

It should be noted that both the first threshold and the second threshold may be flexibly set. For example, both the first threshold and the second threshold may be small values close to 0. As an implementation, either the first threshold or the second threshold may be set as $c \times t_s$, where $t_s$ represents a sampling time interval of the reference signal. Additionally, the first threshold and the second threshold may be the same or different. In the case where the first threshold and the second threshold are the same, a method for determining the line-of-sight type may be expressed as:

$$\begin{cases} \text{line of sight}, & c \times t_b^a - d_b^a \leq \varphi_1 \\ \text{non} - \text{line of sight}, & c \times t_b^a - d_b^a > \varphi_1 \end{cases}.$$

It should be understood that when the product of the first time of arrival and the speed of light and the distance between the first reference point and the first communication device are less than the first threshold, the line-of-sight type may be classified as line of sight. In other words, when the difference between the product of the first time of arrival and the speed of light and the distance between the first reference point and the first communication device is small, the line-of-sight type may be classified as line of sight. When the product of the first time of arrival and the speed of light and the distance between the first reference point and the first communication device are greater than the second threshold, the line-of-sight type may be classified as non-line of sight. In other words, when the difference between the product of the first time of arrival and the speed of light and the distance between the first reference point and the first communication device is large, the line-of-sight type may be classified as non-line of sight.

In the offline phase, the first CIR may be merged with the first location label to form first label data. Taking the first location label including the location coordinates of the first reference point as an example, the first label data may be represented as $\mathrm{F} = \left( T_b^a \ x_b \ y_b \right)$. Taking the first location label including the line-of-sight type as an example, the first label data may be represented as $\mathrm{F} = \left( T_b^a \ G_b^a \right)$.

For the plurality of reference points, label data corresponding to each reference point may form a label data set. Taking the first location label including the location coordinates as an example, the label data set may be represented as $F = (T \ x \ y)$. Taking the first location label including the line-of-sight type as an example, the label data set may be represented as $F = (T \ G)$. Since the label data set is determined based on the reference points, it may also be referred to as a fingerprint database. Correspondingly, the positioning model may be implemented based on fingerprints.

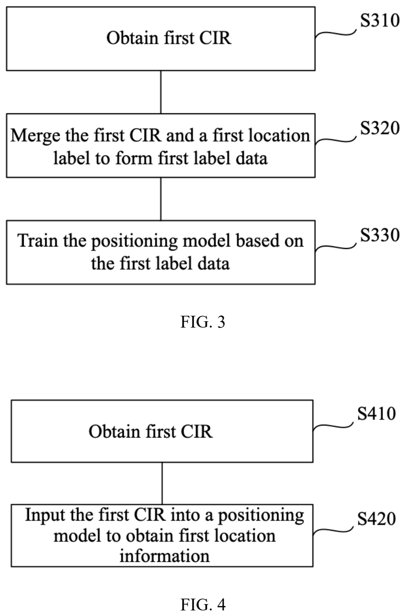

The following describes operations involved in the offline phase and online phase with reference to FIG. 3 and FIG. 4.

FIG. 3 is a schematic flowchart of a method for training a positioning model provided in an embodiment of the present disclosure. The method shown in FIG. 3 may be performed by an electronic device. The electronic device may be the communication device as described above. For example, the method shown in FIG. 3 may be performed by the location server. The method shown in FIG. 3 may include operations S310 to S330.

At operation S310, the first CIR is obtained.

At operation S320, the first CIR and the first location label are merged to form the first label data.

At operation S330, the positioning model is trained based on the first label data.

The present disclosure does not limit specific training methods for the positioning model. For example, the positioning model may be trained using methods such as genetic algorithms, neural evolutionary algorithms, etc.

FIG. 4 is a schematic flowchart of a method for positioning provided in the embodiment of the present disclosure. That is, FIG. 4 is a schematic diagram of the online phase. The method shown in FIG. 4 may be performed by an electronic device. The electronic device may be the communication device described above. For example, the method shown in FIG. 4 may be performed by the location server. The method shown in FIG. 4 may include operations S410 to S420.

At operation S410, the first CIR is obtained.

At operation S420, the first CIR is input into the positioning model to obtain first location information.

To facilitate understanding of the present disclosure, the following detailed description is provided through Embodiment 1 and Embodiment 2.

EMBODIMENT 1

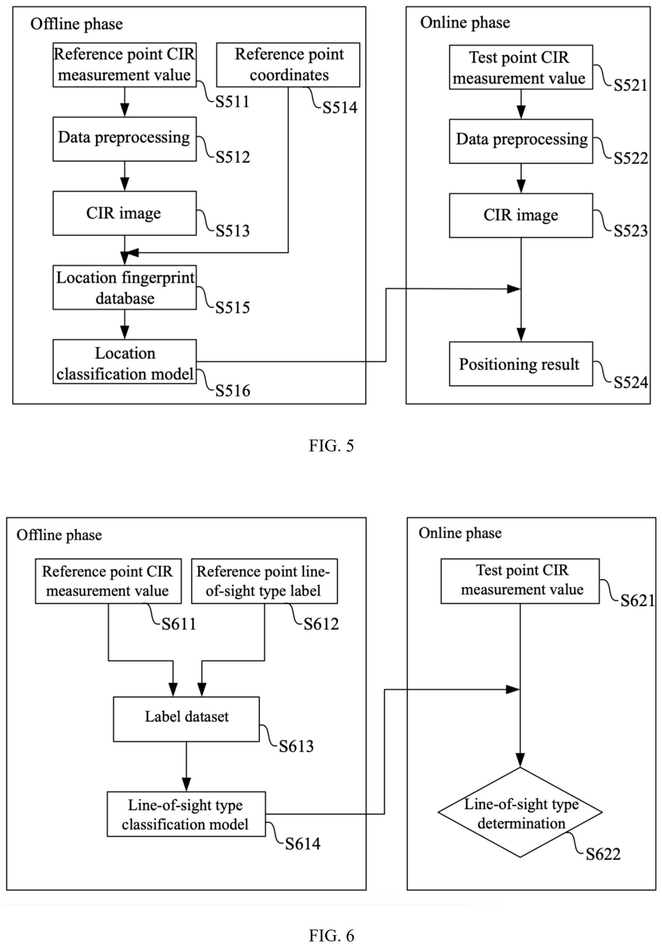

FIG. 5 is an example diagram of a direct positioning method provided in Embodiment 1. Based on the method shown in FIG. 5, direct positioning of the terminal device is achieved, that is, the location coordinates of the terminal device are output.

The method shown in FIG. 5 may include an offline phase and an online phase. The offline phase involves data collection and model training. The online phase involves data collection and positioning of the terminal device.

The offline phase includes operations S511 to S516.

At operation S511, there are A base stations in the region to be positioned, B reference points are randomly selected in this region, the mobile terminal is placed at each reference point, the CIR measurement value matrix $H_b^a \left( a = 1, 2, 3, ..., A; b = 1, 2, 3, ..., B \right)$ for each base station is collected, and location coordinates $(x_b, \ y_b)$ corresponding to each reference point are simultaneously recorded.

The CIR measurement values may be represented as a matrix $H_b^a$. $H_b^a$ may be represented as:

$$H_b^a = \begin{pmatrix} R_1 & I_1 \\ R_2 & I_2 \\ \vdots & \vdots \\ R_N & I_N \end{pmatrix}$$

, where $b$ represents a $b^{th}$ reference point in the positioning region, $a$ represents an $a^{th}$ base station in the positioning region, *N* represents the number of sampling points, and R and I represent real and imaginary parts, respectively.

At operation S512, the CIR measurement value matrix for each base station is preprocessed. The preprocessing includes truncating first M sampling points to obtain a matrix $\widehat{H}_b^a$. $\widehat{H}_b^a$ may be represented as:

$$\hat{H}_b^a = \begin{pmatrix} R_1 & I_1 \\ R_2 & I_2 \\ \vdots & \vdots \\ R_M & I_M \end{pmatrix},$$

where M=256.

At operation S513, row and column conversion is performed on the truncated measurement value matrix $\widehat{H}_b^a$ to obtain a CIR image $T_b^a$. $T_b^a$ satisfies:

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}.$$

That is, at operation S513, a matrix of size M×2 is converted into a matrix of size 2u×v+1, where insufficient parts are filled with the element 0. The values of u and v may be obtained through experimental comparison and parameter tuning. For example, u=256, and uv+1 is the number of points in a dataset.

At operation S514, location coordinates corresponding to each reference point ($x_b$, $y_b$) are obtained.

At operation S515, the CIR image $T_b^a$ obtained at each reference point is merged with corresponding location coordinates ($x_b$, $y_b$) to construct a location fingerprint database F. The location fingerprint database F may be represented as $F = (T_b^a \ x_b \ y_b)$.

At operation S516, the location fingerprint database F is used as input to a CNN model and the CNN model is trained. After the CNN model is trained, a CNN location classification model is obtained.

The CNN model may include an input layer, a convolutional layer, a pooling layer, a fully connected layer, and a softmax layer connected in sequence. The parameters of the CNN model may be obtained through analysis of experimental results.

The online phase may include operations S521 to S524.

At operation S521, a test point is selected in the region to be positioned, and the mobile terminal collects the CIR measurement value matrix $H_t^a$ from each base station at the test point, where t represents the test point.

At operation S522, the CIR measurement value matrix $H_t^a$ for each base station is preprocessed. The preprocessing includes truncating the first M sampling points of the matrix $H_t^a$ to obtain a matrix $\widehat{H}_t^a$.

At operation S523, row and column conversion is performed on the truncated measurement value matrix $\widehat{H}_t^a$ to obtain a CIR image $T_t^a$.

The process of obtaining the CIR image in operations S521 to S523 is similar to the process of obtaining the CIR image in operations S511 to S513, which is not repeated here.

At operation S524, the CIR image $T_t^a$ is input into the CNN location classification model trained at operation S516 for online matching, to obtain a similarity probability $p_k$ between the test point and each reference point. Furthermore, the probability-weighted centroid algorithm is used to obtain positioning coordinates L of the test point based on the similarity probability $p_k$.

The weighted centroid algorithm may be implemented using the following formula:

$$L = \frac{\sum_{k \in \Omega} p_k(x_k, y_k)}{\sum_{k \in \Omega} p_k},$$

where Ω is a set of first K reference points with high similarity probabilities, and ($x_k$, $y_k$) are coordinates of a $k^{th}$ reference point. K=1, 2, ......, K.

EMBODIMENT 2

FIG. 6 is an example diagram of an indirect positioning method provided in Embodiment 2. Based on the method shown in FIG. 6, indirect positioning of the terminal device is achieved, that is, the line-of-sight type of the terminal device is output. In other words, the method provided in FIG. 6 may be a line-of-sight type classification method.

The method shown in FIG. 6 may include an offline phase and an online phase. The offline phase involves data collection and model training. The online phase involves data collection and positioning of the terminal device.

The offline phase may include operations S611 to S614.

At operation S611, there are A base stations in the region to be positioned, B reference points are randomly selected in this region, the mobile terminal is placed at each reference point, the CIR measurement value matrix $H_b^a\ (a=1,2,3,...,A; b=1,2,3,...,B)$ for each base station is collected, and location coordinates $(x_b, y_b)$ corresponding to each reference point are simultaneously recorded.

The CIR measurement values may be represented as a matrix $H_b^a$. $H_b^a$ may be represented as:

$$H_b^a = \begin{pmatrix} R_1 & I_1 \\ R_2 & I_2 \\ \vdots & \vdots \\ R_N & I_N \end{pmatrix}$$, where $b$ represents a $b^{th}$ reference point in the positioning region, $a$ represents an $a^{th}$ base station in the positioning region, $N$ represents the number of sampling points, and R and I represent real and imaginary parts, respectively.

At operation S612, line-of-sight/non-line-of-sight conditions $G_b^a$ between the reference points and the base stations are obtained.

Line-of-sight/non-line-of-sight labels may be represented as $G_b^a$:

$$G_b^a \begin{cases} \mathbf{0}, & \text{line of sight} \\ \mathbf{1}, & \text{non} - \text{line of sight} \end{cases}.$$

The CIR measurement value matrix $H_b^a$ collected at each base station is used to calculate the first time of arrival $t_b^a$ of the signal. The method for determining line of sight and non-line of sight may be represented as:

$$\begin{cases} \textbf{line of sight,} & \mathbf{c} \times t_b^a - d_b^a \le \boldsymbol{\varphi_1} \\ \textbf{non} - \textbf{line of sight,} & \mathbf{c} \times t_b^a - d_b^a > \boldsymbol{\varphi_1} \end{cases},$$

where c is the speed of light, and $\varphi_1$ may be $\varphi_1 = c \times t_s$ or a self-defined threshold (a relatively small value close to 0), where $t_s$ is a sampling time interval of the receiver, and $d_b^a$ is a distance between each reference point and the base station.

At operation S613, the CIR measurement matrix $H_b^a$ obtained at each reference point is merged with the corresponding line-of-sight/non-line-of-sight label to construct a label dataset $F$. The label dataset may be represented as $F = \begin{pmatrix} T_b^a & G_b^a \end{pmatrix}$.

At operation S614, the label dataset $F$ is used as input to a line-of-sight type classification model (hereinafter referred to as the LOS classification model) to obtain the LOS classification model after training.

The online phase may include operations S621 and S622.

At operation S621, a test point is selected in the region to be positioned, and the mobile terminal collects the CIR measurement value matrix $H_b^a$ from each base station at the test point.

At operation S622, the CIR measurement value matrix $H_b^a$ of each base station collected at the test point is input into the LOS classification model trained at operation S614 to obtain the line-of-sight/ non-line-of sight condition between each base station and the test point.

The method embodiments of the present disclosure are described in detail above, and the apparatus embodiments of the present disclosure are described in detail below. It should be understood that descriptions of the method embodiments correspond to descriptions of the apparatus embodiments, and therefore, reference may be made to the foregoing method embodiments for parts that are not described in detail.

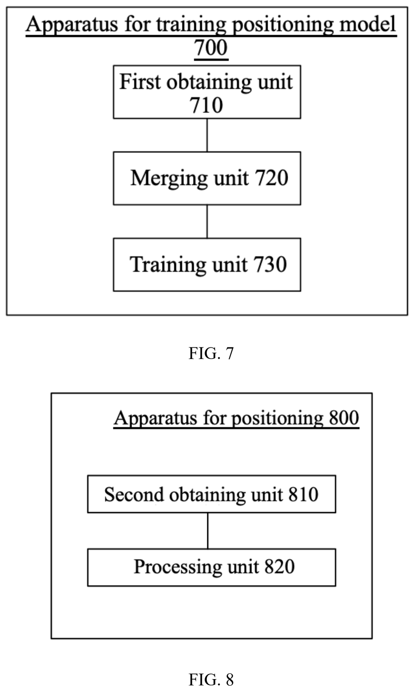

FIG. 7 is a schematic structural diagram of an apparatus 700 for training a positioning model provided in the embodiment of the present disclosure. The apparatus 700 includes a first obtaining unit 710, a merging unit 720, and a training unit 730.

The first obtaining unit 710 is configured to obtain first CIR. The first CIR is obtained based on measurement of a reference signal of a first reference point.

The merging unit 720 is configured to merge the first CIR and a first location label to form first label data.

The training unit 730 is configured to train the positioning model based on the first label data.

It should be noted that the reference signal is used for positioning, the reference signal is sent or received by one or more communication devices, and the one or more communication devices include a first communication device.

In some embodiments, the first location label includes one or both of: a line-of-sight type between the first reference point and the first communication device; and the location coordinates of the first reference point.

In some embodiments, the line-of-sight type is determined based on one or both of: a distance between the first reference point and the first communication device; and a first time of arrival of the reference signal at the first communication device.

In some embodiments, in a case that $c \times t_b^a - d_b^a \leq \varphi_1$ is satisfied, the line-of-sight type is line of sight; and/or in a case that $c \times t_b^a - d_b^a > \varphi_2$ is satisfied, the line-of-sight type is non-line of sight; where $c$ is a speed of light, $t_b^a$ is the first time of arrival, $\varphi_1$ is a first threshold, $\varphi_2$ is a second threshold, $d_b^a$ is the distance between the first reference point and the first communication device, b is an identifier of the first reference point, and a is an identifier of the first communication device.

In some embodiments, the first threshold $\varphi_1$ satisfies $\varphi_1 = c \times t_s$, and/or the second threshold $\varphi_2$ satisfies $\varphi_2 = c \times t_s$, where $t_s$ is a sampling time interval of the reference signal.

In some embodiments, the first CIR is represented as a matrix $H_b^a = \begin{pmatrix} R_1 & I_1 \\ R_2 & I_2 \\ \vdots & \vdots \\ R_N & I_N \end{pmatrix}$, where N represents a number of sampling points corresponding to the first CIR, R represents a real part, I represents an imaginary part, b is an identifier of the first reference point, and a is an identifier of the first communication device.

In some embodiments, the apparatus further includes: a first truncation unit, configured to perform truncation on the first CIR to obtain processed first CIR, where the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$, where M is a value less than N.

In some embodiments, the apparatus further includes: a first conversion unit, configured to perform row and column conversion on the matrix $\hat{H}_b^a$ to obtain a CIR image. The CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$, where u represents a number of sampling points corresponding to the processed first CIR, and 2u×v+1 represents a number of points in a data set.

In some embodiments, the positioning model includes a CNN model and/or a KNN model.

FIG. 8 shows an apparatus 800 for positioning provided in an embodiment of the present disclosure. As an implementation, the apparatus 800 may be a communication device. The apparatus 800 includes a second obtaining unit 810 and a processing unit 820.

The second obtaining unit 810 is configured to obtain first CIR, where the first CIR is obtained based on measurement of a reference signal of a test point. The processing unit 820 is configured to input the first CIR into a positioning model to obtain first location information.

It should be noted that the reference signal is used for positioning, the reference signal is sent or received by one or more communication devices, and the one or more communication devices include a first communication device.

In some embodiments, the first location information includes one or both of: a line-of-sight type between the test point and the first communication device; and a similarity probability between a location corresponding to the test point and a location corresponding to a first reference point.

In some embodiments, the test point is located in a first region, the first region includes a plurality of reference points, the plurality of reference points include the first reference point, and location coordinates of the test point are determined based on similarity probabilities corresponding between the test point and the plurality of reference points and location coordinates of the plurality of reference points.

In some embodiments, the location coordinates L of the test point satisfies $L = \dfrac{\sum_{k \in \Omega} p_k (x_k, y_k)}{\sum_{k \in \Omega} p_k}$, where $\Omega$ is a set of first K reference points with high similarity probabilities, and $(x_k, y_k)$ are coordinates of a $k^{th}$ reference point, and $p_k$ is a similarity probability between the test point and a location corresponding to the $k^{th}$ reference point.

In some embodiments, the first CIR is represented as a matrix $H_b^a = \begin{pmatrix} R_1 & I_1 \\ R_2 & I_2 \\ \vdots & \vdots \\ R_N & I_N \end{pmatrix}$, where N represents a number of sampling points corresponding to the first CIR, R represents a real part, I represents an imaginary part, b is an identifier of the test point, and a is an identifier of the first communication device.

In some embodiments, the apparatus further includes a second truncation unit, configured to perform truncation on the first CIR to obtain processed first CIR, where the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$, where M is a value less than N.

In some embodiments, the apparatus further includes a second conversion unit, configured to perform row and column conversion on the matrix $\hat{H}_b^a$ to obtain a CIR image. The CIR image is represented as a matrix $T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$, where u represents a number of sampling points corresponding to the processed first CIR, and 2u×v+1 represents a number of points in a data set.

In some embodiments, the positioning model includes a CNN model and/or a KNN model.

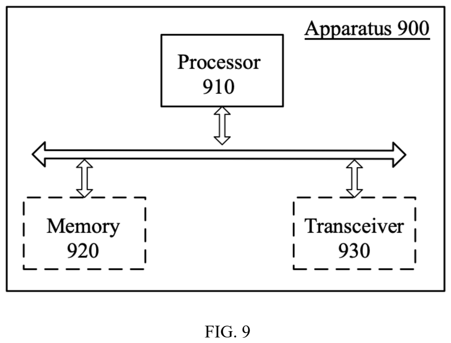

In optional embodiments, the first obtaining unit 710, the merging unit 720, the training unit 730, the second obtaining unit 810, or the processing unit 820 may be implemented as a processor 910. The apparatus 700 or apparatus 800 may further include a transceiver 930 and/or a memory 920, as shown in FIG. 9.

FIG. 9 is a schematic structural diagram of an apparatus for communication according to an embodiment of the present disclosure. The dashed line in FIG. 9 indicates that the unit or module is optional. The apparatus 900 may be configured to implement the method described in the foregoing method embodiments. The apparatus 900 may be an electronic device, a chip, a terminal device, or a network device.

The apparatus 900 may include one or more processors 910, and the processor 910 may support the apparatus 900 to implement the method described in the foregoing method embodiments. The processor 910 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 900 may further include one or more memories 920 storing a program, and the program may be executed by the processor 910 to cause the processor 910 to perform the method described in the foregoing method embodiments. The memory 920 may be independent of the processor 910 or may be integrated into the processor 910.

The apparatus 900 may further include a transceiver 930, and the processor 910 may communicate with another device or chip via the transceiver 930. For example, the processor 910 may perform data transceiving with another device or chip via the transceiver 930.

Embodiments of the present disclosure further provide a computer-readable storage medium, configured to store a program. The computer-readable storage medium may be applied to the apparatus provided in the embodiments of the present disclosure, and the program causes the computer to perform the methods in various embodiments of the present disclosure.

Embodiments of the present disclosure further provide a computer program product. The computer program product includes a program. The computer program product may be applied to the apparatus provided in the embodiments of the present disclosure, and the program causes the computer to perform the methods in various embodiments of the present disclosure.

Embodiments of the present disclosure further provide a computer program. The computer program may be applied to the apparatus provided in the embodiments of the present disclosure, and the computer program causes the computer to perform the methods in various embodiments of the present disclosure.

It should be understood that the terms "system" and "network" may be used interchangeably in the present disclosure. In addition, the terms used in the present disclosure are intended only to explain specific embodiments of the present disclosure and are not intended to limit the present disclosure. The terms "first", "second", "third" and "fourth" in the description and claims as well as the accompanying drawings of the present disclosure are used to distinguish between different objects and not to describe a particular order. Furthermore, the terms "including" and "having", and any variation thereof, are intended to cover non-exclusive inclusion.

In the embodiments of the present disclosure, the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communications system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In embodiments of the present disclosure, "including" may indicate either directly or indirectly including. Optionally, references to "including" in embodiments of the present disclosure may be replaced with "indicating" or "used to determine". For example, A including B may be replaced with A indicating B or A used to determine B.

In the embodiments of the present disclosure, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for training a positioning model, comprising:

   obtaining first channel impulse response, CIR, wherein the first CIR is obtained based on measurement of a reference signal of a first reference point;
   merging the first CIR and a first location label to form first label data; and
   training the positioning model based on the first label data;
   wherein the reference signal is used for positioning, the reference signal is sent or received by one or more communication devices, and the one or more communication devices include a first communication device.

2. The method according to claim 1, wherein the first location label includes one or both of:

   a line-of-sight type between the first reference point and the first communication device; and
   location coordinates of the first reference point.

3. The method according to claim 2, wherein the line-of-sight type is determined based on one or both of:

   a distance between the first reference point and the first communication device; and
   a first time of arrival of the reference signal at the first communication device.

4. The method according to claim 3, wherein:

   in a case that $c \times t_b^a - d_b^a \leq \varphi_1$ is satisfied, the line-of-sight type is line of sight; and/or

in a case that $c \times t_b^a - d_b^a > \varphi_2$ is satisfied, the line-of-sight type is non-line of sight;

wherein $c$ is a speed of light, $t_b^a$ is the first time of arrival, $\varphi_1$ is a first threshold, $\varphi_2$ is a second threshold, $d_b^a$ is the distance between the first reference point and the first communication device, b is an identifier of the first reference point, and a is an identifier of the first communication device.

5. The method according to claim 4, wherein the first threshold $\varphi_1$ satisfies $\varphi_1 = c \times t_s$, and/or the second threshold $\varphi_2$ satisfies $\varphi_2 = c \times t_s$, wherein $t_s$ is a sampling time interval of the reference signal.

6. The method according to any one of claims 1 to 5, wherein the first CIR is represented as a matrix $H_b^a = \begin{pmatrix} R_1 & I_1 \\ R_2 & I_2 \\ \vdots & \vdots \\ R_N & I_N \end{pmatrix}$,

wherein N represents a number of sampling points corresponding to the first CIR, R represents a real part, I represents an imaginary part, b is an identifier of the first reference point, and a is an identifier of the first communication device.

7. The method according to claim 6, further comprising:
performing truncation on the first CIR to obtain processed first CIR, wherein the processed first CIR is represented as a matrix $\hat{H}_b^a = \begin{pmatrix} R_1 & I_1 \\ R_2 & I_2 \\ \vdots & \vdots \\ R_M & I_M \end{pmatrix}$, wherein M is a value less than N.

8. The method according to claim 7, further comprising:

performing row and column conversion on the matrix $\hat{H}_b^a$ to obtain a CIR image;

wherein the CIR image is represented as a matrix $T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$,

wherein u represents a number of sampling points corresponding to the processed first CIR, and 2u×v+1 represents a number of points in a data set.

9. The method according to any one of claims 1 to 8, wherein the positioning model includes one or both of a convolutional neural network, CNN, model and a K-nearest neighbor, KNN, model.

10. A method for positioning, comprising:

obtaining first channel impulse response, CIR, wherein the first CIR is obtained based on measurement of a reference signal of a test point; and
inputting the first CIR into a positioning model to obtain first location information;
wherein the reference signal is used for positioning, the reference signal is sent or received by one or more communication devices, and the one or more communication devices include a first communication device.

11. The method according to claim 10, wherein the first location information includes one or both of:

a line-of-sight type between the test point and the first communication device; and
a similarity probability between a location corresponding to the test point and a location corresponding to a first reference point.

**12.** The method according to claim 11, wherein the test point is located in a first region, the first region includes a plurality of reference points, the plurality of reference points include the first reference point, and location coordinates of the test point are determined based on similarity probabilities corresponding between the test point and the plurality of reference points, and location coordinates of the plurality of reference points.

**13.** The method according to claim 12, wherein the location coordinates L of the test point satisfies

$$L = \frac{\sum_{k \in \Omega} p_k (x_k, y_k)}{\sum_{k \in \Omega} p_k}$$

, wherein $\Omega$ is a set of first K reference points with high similarity probabilities, and $(x_k, y_k)$ are coordinates of a $k^{th}$ reference point, and $p_k$ is a similarity probability between the test point and a location corresponding to the $k^{th}$ reference point.

**14.** The method according to any one of claims 10 to 13, wherein the first CIR is represented as a matrix

$$H_b^a = \begin{pmatrix} R_1 & I_1 \\ R_2 & I_2 \\ \vdots & \vdots \\ R_N & I_N \end{pmatrix}$$

, wherein N represents a number of sampling points corresponding to the first CIR, R represents a real part, I represents an imaginary part, b is an identifier of the test point, and a is an identifier of the first communication device.

**15.** The method according to claim 14, further comprising:
performing truncation on the first CIR to obtain processed first CIR, wherein the processed first CIR is represented as a matrix

$$\hat{H}_b^a = \begin{pmatrix} R_1 & I_1 \\ R_2 & I_2 \\ \vdots & \vdots \\ R_M & I_M \end{pmatrix}$$

, wherein M is a value less than N.

**16.** The method according to claim 15, further comprising:

performing row and column conversion on the matrix $\hat{H}_b^a$ to obtain a CIR image;
wherein the CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$

, wherein u represents a number of sampling points corresponding to the processed first CIR, and $2u \times v + 1$ represents a number of points in a data set.

**17.** The method according to any one of claims 10 to 16, wherein the positioning model includes one or both of a convolutional neural network, CNN, model and a K-nearest neighbor, KNN, model.

**18.** An apparatus for training a positioning model, comprising:

a first obtaining unit, configured to obtain first channel impulse response. CIR, wherein the first CIR is obtained based on measurement of a reference signal of a first reference point;
a merging unit, configured to merge the first CIR and a first location label to form first label data; and
a training unit, configured to train the positioning model based on the first label data;

wherein the reference signal is used for positioning, the reference signal is sent or received by one or more communication devices, and the one or more communication devices include a first communication device.

**19.** The apparatus according to claim 18, wherein the first location label includes one or both of:

a line-of-sight type between the first reference point and the first communication device; and
location coordinates of the first reference point.

**20.** The apparatus according to claim 19, wherein the line-of-sight type is determined based on one or both of:

a distance between the first reference point and the first communication device; and
a first time of arrival of the reference signal at the first communication device.

**21.** The apparatus according to claim 20, wherein:

in a case that $c \times t_b^a - d_b^a \leq \varphi_1$ is satisfied, the line-of-sight type is line of sight; and/or

in a case that $c \times t_b^a - d_b^a > \varphi_2$ is satisfied, the line-of-sight type is non-line of sight;

wherein $c$ is a speed of light, $t_b^a$ is the first time of arrival, $\varphi_1$ is a first threshold, $\varphi_2$ is a second threshold, $d_b^a$ is the distance between the first reference point and the first communication device, b is an identifier of the first reference point, and a is an identifier of the first communication device.

**22.** The apparatus according to claim 21, wherein the first threshold $\varphi_1$ satisfies $\varphi_1 = c \times t_s$, and/or the second threshold $\varphi_2$ satisfies $\varphi_2 = c \times t_s$, wherein $t_s$ is a sampling time interval of the reference signal.

**23.** The apparatus according to any one of claims 18 to 22, wherein the first CIR is represented as a matrix

$$H_b^a = \begin{pmatrix} R_1 & I_1 \\ R_2 & I_2 \\ \vdots & \vdots \\ R_N & I_N \end{pmatrix}$$, wherein N represents a number of sampling points corresponding to the first CIR, R represents a real part, I represents an imaginary part, b is an identifier of the first reference point, and a is an identifier of the first communication device.

**24.** The apparatus according to claim 23, further comprising:
a first truncation unit, configured to perform truncation on the first CIR to obtain processed first CIR, wherein the processed first CIR is represented as a matrix $$\hat{H}_b^a = \begin{pmatrix} R_1 & I_1 \\ R_2 & I_2 \\ \vdots & \vdots \\ R_M & I_M \end{pmatrix}$$, wherein M is a value less than N.

**25.** The apparatus according to claim 24, further comprising:

a first conversion unit, configured to perform row and column conversion on the matrix $\hat{H}_b^a$ to obtain a CIR image;
wherein the CIR image is represented as a matrix

$$T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$$, wherein u represents a number of sampling points corresponding to the processed first CIR, and 2u×v+1 represents a number of points in a data set.

26. The apparatus according to any one of claims 18 to 25, wherein the positioning model includes one or both of a convolutional neural network, CNN, model and a K-nearest neighbor, KNN, model.

27. An apparatus for positioning, comprising:

a second obtaining unit, configured to obtain first channel impulse response, CIR, wherein the first CIR is obtained based on measurement of a reference signal of a test point; and
a processing unit, configured to input the first CIR into a positioning model to obtain first location information; wherein the reference signal is used for positioning, the reference signal is sent or received by one or more communication devices, and the one or more communication devices include a first communication device.

28. The apparatus according to claim 27, wherein the first location information includes one or both of:

a line-of-sight type between the test point and the first communication device; and
a similarity probability between a location corresponding to the test point and a location corresponding to a first reference point.

29. The apparatus according to claim 28, wherein the test point is located in a first region, the first region includes a plurality of reference points, the plurality of reference points include the first reference point, and location coordinates of the test point are determined based on similarity probabilities corresponding between the test point and the plurality of reference points, and location coordinates of the plurality of reference points.

30. The apparatus according to claim 29, wherein the location coordinates L of the test point satisfies

$$L = \frac{\sum_{k \in \Omega} p_k (x_k, y_k)}{\sum_{k \in \Omega} p_k}$$ , wherein $\Omega$ is a set of first K reference points with high similarity probabilities, and $(x_k,$

$y_k)$ are coordinates of a $k^{th}$ reference point, and $p_k$ is a similarity probability between the test point and a location corresponding to the $k^{th}$ reference point.

31. The apparatus according to any one of claims 27 to 30, wherein the first CIR is represented as a matrix

$$H_b^a = \begin{pmatrix} R_1 & I_1 \\ R_2 & I_2 \\ \vdots & \vdots \\ R_N & I_N \end{pmatrix}$$ , wherein N represents a number of sampling points corresponding to the first CIR, R represents a real part, I represents an imaginary part, b is an identifier of the test point, and a is an identifier of the first communication device.

32. The apparatus according to claim 31, further comprising:
a second truncation unit, configured to perform truncation on the first CIR to obtain processed first CIR, wherein the processed first CIR is represented as a matrix $$\hat{H}_b^a = \begin{pmatrix} R_1 & I_1 \\ R_2 & I_2 \\ \vdots & \vdots \\ R_M & I_M \end{pmatrix}$$ , wherein M is a value less than N.

33. The apparatus according to claim 32, further comprising:

a second conversion unit, configured to perform row and column conversion on the matrix $\hat{H}_b^a$ to obtain a CIR image;

wherein the CIR image is represented as a matrix $T_b^a = \begin{pmatrix} R_1 & I_1 & R_2 & I_2 & \cdots & R_u & I_u \\ R_{u+1} & I_{u+1} & R_{u+2} & I_{u+2} & \cdots & R_{2u} & I_{2u} \\ \vdots & \vdots & \vdots & \vdots & \ddots & \vdots & \vdots \\ R_{uv+1} & I_{uv+1} & R_{uv+2} & I_{uv+2} & \cdots & 0 & 0 \end{pmatrix}$,

wherein u represents a number of sampling points corresponding to the processed first CIR, and $2u \times v+1$ represents a number of points in a data set.

34. The apparatus according to any one of claims 27 to 33, wherein the positioning model includes one or both of a convolutional neural network, CNN, model and a K-nearest neighbor, KNN, model.

35. A device for training a positioning model, comprising a memory and a processor, wherein the memory is configured to store a program, and the processor is configured to invoke the program in the memory to cause the device to perform the method according to any one of claims 1 to 9.

36. A device for positioning, comprising a memory and a processor, wherein the memory is configured to store a program, and the processor is configured to invoke the program in the memory to cause the device to perform the method according to any one of claims 10 to 17.

37. An apparatus, comprising a processor, wherein the processor is configured to invoke a program from a memory to cause the apparatus to perform the method according to any one of claims 1 to 17.

38. A chip, comprising a processor, wherein the processor is configured to invoke a program from a memory to cause a device on which the chip is installed to perform the method according to any one of claims 1 to 17.

39. A computer-readable storage medium storing a program, wherein the program causes a computer to perform the method according to any one of claims 1 to 17.

40. A computer program product, comprising a program that causes a computer to perform the method according to any one of claims 1 to 17.

41. A computer program, wherein the computer program causes a computer to perform the method according to any one of claims 1 to 17.

100

FIG. 1

Room 1          Wall          Room 2

FIG. 2

Obtain first CIR — S310

Merge the first CIR and a first location label to form first label data — S320

Train the positioning model based on the first label data — S330

FIG. 3

Obtain first CIR — S410

Input the first CIR into a positioning model to obtain first location information — S420

FIG. 4

## Offline phase

Reference point CIR measurement value — S511

Reference point coordinates — S514

Data preprocessing — S512

CIR image — S513

Location fingerprint database — S515

Location classification model — S516

## Online phase

Test point CIR measurement value — S521

Data preprocessing — S522

CIR image — S523

Positioning result — S524

FIG. 5

## Offline phase

Reference point CIR measurement value — S611

Reference point line-of-sight type label — S612

Label dataset — S613

Line-of-sight type classification model — S614

## Online phase

Test point CIR measurement value — S621

Line-of-sight type determination — S622

FIG. 6

Apparatus for training positioning model
700

First obtaining unit
710

Merging unit 720

Training unit 730

FIG. 7

Apparatus for positioning 800

Second obtaining unit 810

Processing unit 820

FIG. 8

FIG. 9

## INTERNATIONAL SEARCH REPORT

| International application No. |
| --- |
| **PCT/CN2023/090917** |

### A. CLASSIFICATION OF SUBJECT MATTER

H04W4/02(2018.01)i; G01S5/02(2010.01)i; G06N3/02(2006.01)i

According to International Patent Classification (IPC) or to both national classification and IPC

### B. FIELDS SEARCHED

Minimum documentation searched (classification system followed by classification symbols)

IPC:H04W G01S G06N

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN: 定位, 信道冲击响应, 信道脉冲响应, 神经网络, 视距, 图像, position, CIR, channel impulse response, CNN, KNN, LOS, NLOS, image

### C. DOCUMENTS CONSIDERED TO BE RELEVANT

| Category* | Citation of document, with indication, where appropriate, of the relevant passages | Relevant to claim No. |
| --- | --- | --- |
| X | CN 111212379 A (TIANGONG UNIVERSITY) 29 May 2020 (2020-05-29) description, paragraphs [0022]-[0060] | 1, 9-10, 17-18, 26-27, 34-41 |
| Y | CN 111212379 A (TIANGONG UNIVERSITY) 29 May 2020 (2020-05-29) description, paragraphs [0022]-[0060] | 2-8, 11-16, 19-25, 28-33 |
| Y | CN 115334639 A (DATANG MOBILE COMMUNICATIONS EQUIPMENT CO., LTD.) 11 November 2022 (2022-11-11) description, paragraphs [0117]-[0328] | 2-5, 11-13, 19-22, 28-30 |
| Y | US 2022404451 A1 (FRAUNHOFER-GESELLSCHAFT ZUR FÖRDERUNG DER ANGEWANDTEN FORSCHUNG E.V.) 22 December 2022 (2022-12-22) description, paragraphs [0060]-[0135] | 6-8, 14-16, 23-25, 31-33 |
| A | CN 112712557 A (SHANGHAI JIAO TONG UNIVERSITY) 27 April 2021 (2021-04-27) entire document | 1-41 |
| A | CN 115398443 A (QUALCOMM INC.) 25 November 2022 (2022-11-25) entire document | 1-41 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 November 2023** | **18 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 704 446 A1

| INTERNATIONAL SEARCH REPORT | | | | International application No. | | | |
|---|---|---|---|---|---|---|---|
| Information on patent family members | | | | **PCT/CN2023/090917** | | | |

| Patent document cited in search report | | | Publication date (day/month/year) | Patent family member(s) | | | Publication date (day/month/year) |
|---|---|---|---|---|---|---|---|
| CN | 111212379 | A | 29 May 2020 | CN | 111212379 | B | 23 November 2021 |
| CN | 115334639 | A | 11 November 2022 | TW | 202245492 | A | 16 November 2022 |
| | | | | WO | 2022237354 | A1 | 17 November 2022 |
| US | 2022404451 | A1 | 22 December 2022 | EP | 3819657 | A1 | 12 May 2021 |
| | | | | WO | 2021089258 | A1 | 14 May 2021 |
| | | | | EP | 4055406 | A1 | 14 September 2022 |
| CN | 112712557 | A | 27 April 2021 | | None | | |
| CN | 115398443 | A | 25 November 2022 | BR | 112022020312 | A2 | 06 December 2022 |
| | | | | WO | 2021211399 | A1 | 21 October 2021 |
| | | | | KR | 20230007326 | A | 12 January 2023 |
| | | | | JP | 2023522314 | A | 30 May 2023 |
| | | | | EP | 4136583 | A1 | 22 February 2023 |
| | | | | US | 2021321221 | A1 | 14 October 2021 |
| | | | | US | 11785421 | B2 | 10 October 2023 |
| | | | | IN | 202247048810 | A | 16 September 2022 |
| | | | | VN | 92090 | A | 26 December 2022 |

Form PCT/ISA/210 (patent family annex) (July 2022)